# EUROPÄISCHE PATENTSCHRIFT

(11) **EP 1 569 313 B1**
(45) Veröffentlichungstag und Bekanntmachung des Hinweises auf die Patenterteilung: **18.10.2006**
(21) Anmeldenummer: 04405115.9
(22) Anmeldetag: 27.02.2004
(51) Int. Cl.: H02G 5/06, H01H 33/24

(54) **Hochspannungsgerät mit Partikelfalle**
High Voltage apparatus with particle trap
Appareil Haute Tension avec piège à particules

(43) Veröffentlichungstag der Anmeldung: 31.08.2005
(73) Patentinhaber: ABB Technology AG, 8050 Zürich (CH)
(72) Erfinder: Holaus, Walter, 8037 Zürich (CH); Pavlovic, Bojan, 8049 Zürich (CH); Garcia, Miguel, 8600 Dübendorf (CH); Bleiker, Daniel, 8046 Zürich (CH); Sologuren-Sanchez, Diego, 5430 Wettingen (CH)
(74) Vertreter: ABB Patent Attorneys

(56) Entgegenhaltungen:
- EP-A- 0 776 021
- US-A- 4 219 366
- US-A1- 2002 104 827
- US-B1- 6 307 172

## Beschreibung

### Technisches Gebiet

Die Erfindung bezieht sich auf das Gebiet der Hochspannungsschaltertechnik. Sie bezieht sich auf ein Hochspannungsschaltgerät und ein Verfahren zum Separieren von Störpartikeln in einem Hochspannungsschaltgerät gemäss dem Oberbegriff der unabhängigen Patentansprüche sowie auf eine Hochspannungsanlage gemäss Anspruch 10.

### Stand der Technik

Ein derartiges Hochspannungsschaltgerät ist beispielsweise aus DE 41 20 309 oder EP 0 776 021 A bekannt. Im ersten Dokument ist eine Partikelfalle beschrieben, welche als ein durch einen Deckel geschlossenen Stutzen ausgebildet ist, dessen Innenseite mit einem Schutzbelag versehen ist. Eine solche Partikelfalle ist vorgesehen zum Einsatz in Hochspannungsschaltgeräten, welche eine geerdete, metallische Kapselung aufweisen, welche ein spannungsbeaufschlagtes Aktivteil umschliesst. Störpartikel, die sich innerhalb der Kapselung befinden und die dielektrische Festigkeit des Hochspannungsschaltgeräts reduzieren können, sollen sich innerhalb der Partikelfalle ansammeln. Die derart separierten Störpartikel sollen innerhalb der Partikelfalle verbleiben, so dass eine nicht durch diese Störpartikel erniedrigte, ausreichend hohe dielektrische Festigkeit des Hochspannungsschaltgerätes gegeben ist.

Ein derartiges Hochspannungsschaltgerät hat den Nachteil, dass seine dielektrische Festigkeit während des Betriebes und somit seine Betriebssicherheit nicht gut sichergestellt ist.

### Darstellung der Erfindung

Es ist deshalb Aufgabe der Erfindung, ein Hochspannungsschaltgerät der eingangs genannten Art zu schaffen, welches die oben genannten Nachteile nicht aufweist. Insbesondere soll ein Hochspannungsschaltgerät geschaffen werden, das eine hohe Betriebssicherheit aufweist.

Diese Aufgabe löst eine Vorrichtung und ein Verfahren mit den Merkmalen der unabhängigen Patentansprüche.

Das erfindungsgemässe Hochspannungsschaltgerät ist in Anspruch 1 definiert.

Dadurch wird eine geringe Störanfälligkeit und hohe Betriebssicherheit des Hochspannungsschaltgerätes erreicht. Die Wahrscheinlichkeit von Fehlern und Überschlägen ist verringert.

Zu den Störpartikeln, welche die dielektrische Festigkeit innerhalb eines Hochspannungsschaltgerätes stören können, gehören elektrisch leitfähige und nicht-leitfähige Teilchen. Solche Partikel entstehen beispielsweise bei der Herstellung des Hochspannungsschaltgerätes und müssen vor dem Verschliessen und Gebrauch des Hochspannungsschaltgerätes so vollständig wie möglich aus dem Inneren der Kapselung entfernt werden. Auch bei jedem Öffnen und Schliessen des Hochspannungsschaltgerätes können Störpartikel eindringen. Insbesondere aber können Störpartikel auch während des Betriebes des Hochspannungsschaltgerätes entstehen. Im allgemeinen weist ein Hochspannungsschaltgerät mindestens ein bewegliches Kontaktstück auf, das einen lösbaren Kontakt mit einem weiteren Kontaktstück bildet. Durch die Bewegung des beweglichen Kontaktstücks können durch Abrieb Störpartikel erzeugt werden. Insbesondere entstehen somit an Schaltstrecken besonders viele Störpartikel, welche durch die Reibung zwischen den Kontaktstücken erzeugt werden. An der Schaltstrecke werden auch im Falle von Lichbogenbildung besonders viele Störpartikel erzeugt. Störpartikel können sich bei ausreichend hoher Feldstärke aufgrund von durch das elektrische Feld erzeugten und auf die Störpartikel wirkenden Kräften bewegen und dadurch insbesondere an dielektrisch besonders stark belaseteten Stellen zu Überschlägen führen.

Aufgrund der Gravitation bewegen sich die so erzeugten Störpartikel vorzugsweise abwärts (insbesondere wenn spannungslos geschaltet wird) und landen somit vorzugsweise vertikal unterhalb der Schaltstrecke. Eine dort angeordnete Partikelfalle kann diese Störpartikel (und somit besonders viele Störpartikel) aufnehmen und dadurch die Betriebssicherheit des Hochspannungsschaltgerätes erhöhen.

Zu den Hochspannungsschaltgeräten im Sinne dieser Anmeldung zählen Hochspannungs- und Hochleistungsschalter, Schalter mit oder ohne Lichtbogenlöschung, Trenner, Erder sowie weitere Schaltgeräte aus dem Bereich der Hochspannungtechnik.

Ein solches Hochspannungsschaltgerät kann für die Verwendung in einer oder in mehreren Einbaulagen vorgesehen sein. Wo die Partikelfalle erfindungsgemäss anzuordnen ist, hängt somit von der oder den Einbaulagen ab.

Eine Partikelfalle beinhaltet vorteilhaft stets einen dielektrisch derart wenig belasteten Bereich, dass Störpartikel die Partikelfalle während des Betriebs des Hochspannungsschaltgerätes nicht mehr verlassen können. Mit Vorteil ist die Partikelfalle gefässförmig ausgebildet, so dass ein Verlassen der Partikelfalle während_des Betriebs des Hochspannungsschaltgerätes_für die Störpartikel erschwert wird. Vorteilhaft beinhaltet eine Partikelfalle einen metallisch umgebenen Bereich mit einer Vertiefung.

Die elektrische Feldstärke in der Partikelfalle sollte um typischerweise zwei Grössenordnungen, vorteilhaft drei oder mehr Grössenordnungen, geringer sein als die elektrische Feldstärke in dielektrisch stark belasteten Bereichen innerhalb der Kapselung. Dies gewährleistet eine sichere Separierung der Störpartikel, auch während Schaltvorgängen. Bevorzugt beträgt die elektrische Feldstärke in der Partikelfalle weniger als 10 kV/cm.

In einer vorteilhaften Ausführungsform beinhaltet die Partikelfalle ein Sichtfenster. Das Sichtfenster kann eine optische Prüfung des Vorhandenseins, der Art und der Menge von Störpartikeln während des Betriebes ermöglichen. Diese optische Prüfung kann dazu verwendet werden, um den Bedarf für eine Wartung oder Revision zu erkennen oder zu bestätigen, ohne dass die Kapselung des Hochspannungsschaltgerätes geöffnet werden muss.

In einer vorteilhaften Ausführungsform ist das Hochspannungsschaltgerät in mindestens einer zweiten Einbaulage verwendbar und weist eine zweite Partikelfalle auf, wobei in der mindestens einen zweiten Einbaulage die zweite Partikelfalle vertikal unterhalb der Schaltstrecke angeordnet ist.

Dadurch sind eine grössere Flexibilität des Einsatzes des Hochspannungsschaltgerätes und eine grosse Betriebssicherheit auch in der zweiten Einbaulage des Hochspannungsschaltgerätes gegeben.

In dem Fall, dass das Hochspannungsschaltgerät mehrere Schaltstrecken aufweist, kann die zweite Partikelfalle auch vertikal unterhalb einer anderen Schaltstrecke angordnet sein, und insbesondere kann auch für jede Schaltstrecke und jede Einbaulage jeweils eine Partikelfalle vorgesehen sein, welche teilweise auch identisch sein können.

Erfindungsgemäß ist in der mindestens einen Einbaulage ein Isolatorteil mit einer im wesentlichen horizontal unterhalb der Schaltstrecke ausgerichteten und dem Innern des Hochspannungsschaltgerätes zugewandten Oberfläche vorhanden, wobei zwischen dem Isolatorteil und der Partikelfalle ein gegenüber der Partikelfalle erhöhter metallischer Wall angeordnet ist.

Ein solches Isolatorteil kann die Aufgabe haben, den Aktivteil oder Teile davon zu stützen und/oder das Innenvolumen des Hochspannungsschaltgerätes von dem Innenvolumen eines benachbarten Bauteiles zu trennen. Isolatorteile in Hochspannungsschaltgeräten sind dielektrisch hoch belastet und darum besonders störempfindlich. Ein Isolatorteil mit einer im wesentlichen horizontal ausgerichteten, dem Schaltgeräte-Inneren zugewandten Oberfläche ist besonders anfällig gegenüber Störpartikeln, welche auf der Oberfläche angeordnet sind.

Ein metallischer Wall oder eine elektrisch leitfähige Erhöhung zwischen dem Isolatorteil und der Partikelfalle kann einerseits verhindern, dass partikelfallenseitig landende Störpartikel sich in Richtung Isolatorteil bewegen, und andererseits für eine geringe elektrische Feldstärke im Bereich der Partikelfalle sorgen.

In einer vorteilhaften Ausführungsform ist das Hochspannungsschaltgerät ein Trenner, insbesondere ein Trenner mit einem Kontaktrohr als beweglicher Kontakt und vorteilhaft mit einer sichtbaren Trennstrecke als Schaltstrecke. Das Hochspannungsschaltgerät kann auch ein Erder oder ein als Erder wirkender Trenner sein, dessen Erder-Trennstrecke die Schaltstrecke darstellt. Besonders vorteilhaft ist das Hochspannungsschaltgerät ein Trenner-Erder mit einer erdseitigen und einer hochspannungsseitigen Trennstrecke.

Vorteilhaft kann die oder eine der Partikelfallen im wesentlichen durch eine Öffnung zur Aufnahme des Kontaktrohres des Trenners oder Erder-Trenners gebildet sein. Das ist vorteilhaft, weil die Öffnung naturgemäss direkt an die Schaltstrecke anschliesst, so dass dort entstehende Partikel gerade an dem Ort gefangen werden, an welchem sie entstehen. Zudem kann die Öffnung im wesentlichen das Innere eines Faradaykäfigs bilden, so dass die Öffnung feldfrei ist.

Vorteilhaft kann ein Sichtfenster der Partikelfalle gleichzeitig als ein Sichtfenster zur optischen Zugänglichmachung einer sichtbaren Trennstrecke sein. In diesem Falle hat das Sichtfenster die Funktionen, einerseits die sichtbare Trennstrecke und andererseits die Partikelfalle respektive die darin vorhandenen Störpartikel optisch zugänglich zu machen. Durch diese Doppelfunktion des Sichtfensters wird ein vereinfachter Aufbau des Hochspannungsschaltgerätes erreicht. Gegenüber der standardmässigen vertikalen Ausrichtung des Sichtfensters zur optischen Zugänglichmachung einer sichtbaren Trennstrecke wird bei einer für die Partikelbeurteilung vorteilhaften horizontalen Ausrichtung des Sichtfensters der Nachteil einer im allgemeinen schlechteren Zugänglichkeit des Sichtfensters für eine durch das Sichtfenster schauende Person inkaufgenommen.

Ein erfindungsgemässes Hochspannungsschaltgerät kann Teil einer erfindungsgemässen Hochspannungsanlage sein.

Das erfindungsgemässe Verfahren zum Separieren von Störpartikeln in einem Hochspannungsschaltgerät ist in Anspruch 11 definiert.

Die weiteren vorteilhaften erfindungsgemässen Verfahren ergeben sich aus den vorteilhaften erfindungsgemässen Vorrichtungen.

Weitere bevorzugte Ausführungsformen und Vorteile gehen aus den abhängigen Patentansprüchen und den Figuren hervor.

### Kurze Beschreibung der Zeichnungen

Im folgenden wird der Erfindungsgegenstand anhand von bevorzugten Ausführungsbeispielen, welche in den beiliegenden Zeichnungen dargestellt sind, näher erläutert. Es zeigen schematisch im Schnitt:
- Fig. 1: einen erfindungsgemässen Erder-Trenner
- Fig. 2: den erfindungsgemässen Erder-Trenner aus Fig. 1 in einer zweiten Einbaulage;
- Fig. 3: den erfindungsgemässen Erder-Trenner aus Fig. 1 in einer dritten Einbaulage;

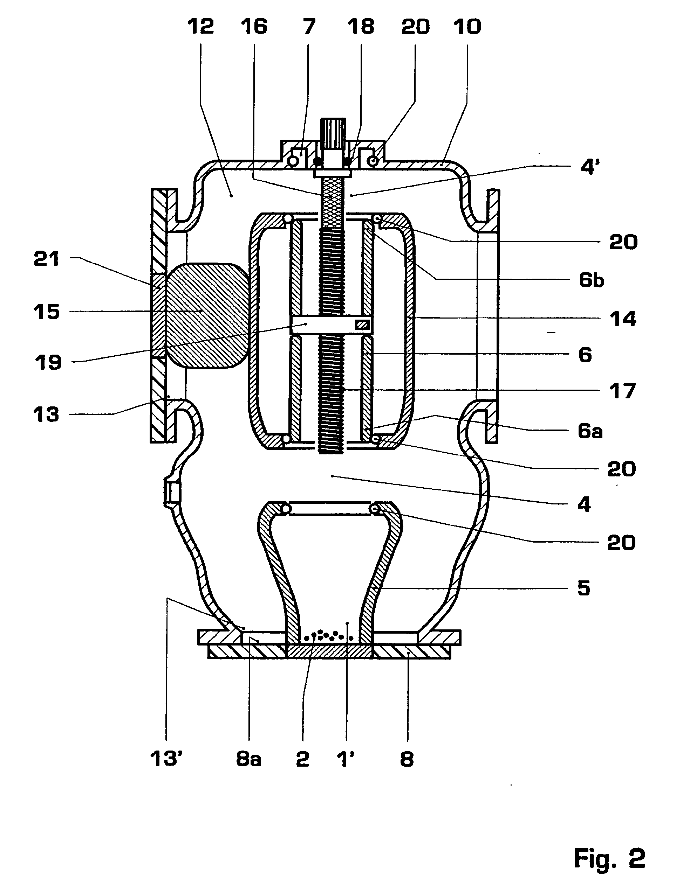

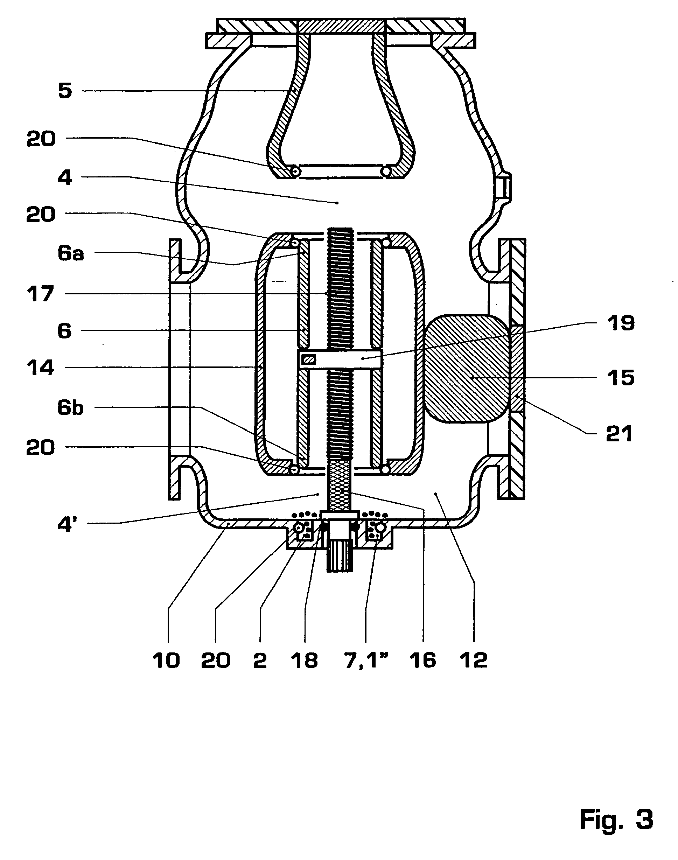

In Figuren 2 und 3 handelt es sich um Beispiele die in den Ansprüchen nicht erfaßt sind.

Die in den Zeichnungen verwendeten Bezugszeichen und deren Bedeutung sind in der Bezugszeichenliste zusammengefasst aufgelistet. Grundsätzlich sind in den Figuren gleiche oder gleichwirkende Teile mit gleichen Bezugszeichen versehen. Die beschriebenen Ausführungsbeispiele stehen beispielhaft für den Erfindungsgegenstand und haben keine beschränkende Wirkung.

### Wege zur Ausführung der Erfindung

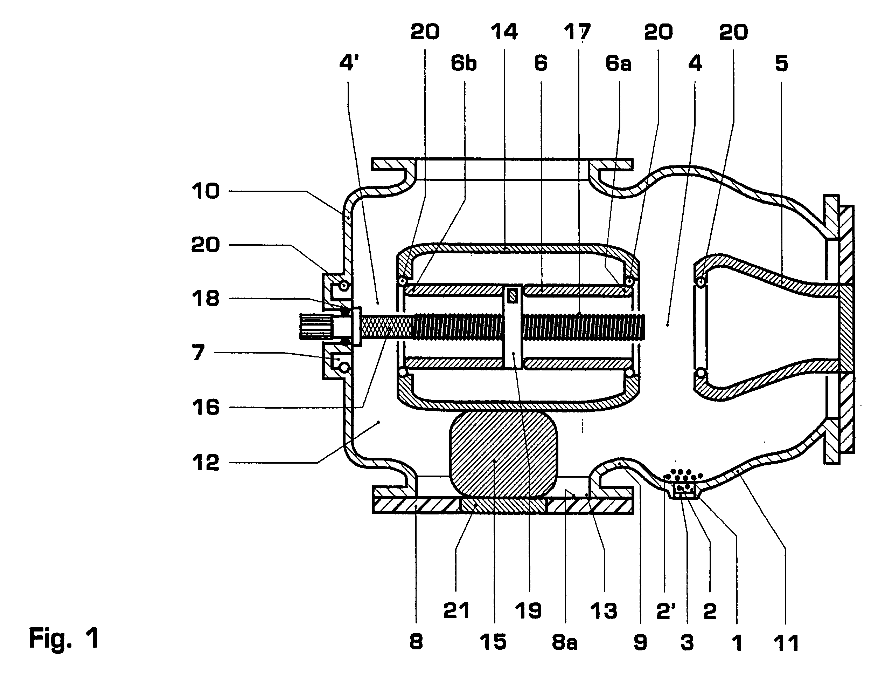

Fig. 1 zeigt einen erfindungsgemässen Erder-Trenner in einer ersten Einbaulage. Dieser Erder-Trenner ist noch in mindestens zwei weiteren Einbaulagen einsetzbar, welche in den Figs. 2 und 3 dargestellt sind.

Der Erder-Trenner weist eine metallische Kapselung 10 auf, welche mit einem Isoliergas 12, vorteilhaft SF₆, gefüllt ist. Alternativ könnte auch Vakuum innerhalb der Kapselung 10 herrschen. Weiterhin beinhaltet die Kapselung 10 Aktivteile, welche auf einem Isolatorteil 8 abgestützt sind. Ein auf einem in dem Isolatorteil 8 vorgesehenen Metallteil 21 (Innenarmatur des Isolatorteils 8) abgestütztes Verbindungsstück 15 stellt eine elektrische Verbindung des Aktivteils nach aussen her. Auf das Verbindungsstück 15 stützt sich ein Kontaktrohrträger 14, welcher ein Kontaktrohr 6 trägt, welches der Kontaktrohrträger 14 mittels eines Spiralfederkontaktes 20 kontaktiert. Mittels einer mittels einer Spindelführung 18 geführten Spindel 17 und einer Wandermutter 19 kann das Kontaktrohr zwischen drei Positionen bewegt werden. Anstelle des Kontaktrohres ist auch ein anderer, beispielsweise vollzylindrisch ausgebildetes bewegliches Kontaktstück vorstellbar. Zur elektrischen Isolation der Wandermutter 19 gegenüber der Kapselung 10 weist die Spindel eine Isolierwelle 16 auf.

In einer Erdungsposition des Erder-Trenners ist ein erdseitiges Ende 6b des Kontaktrohres 6 in einer Öffnung 7 aufgenommen und stellt über Spiralkontakte 20 eine elektrische Verbindung zwischen der geerdeten Kapselung 10 und dem Metaillteil 21 her. Eine erdseitige Trennstrecke 4' ist somit überbrückt, während eine hochspannungsseitige Trennstrecke 4 offen ist. Die Öffnung 7 zur Aufnahme des Kontaktrohres 10 ist in Fig. 1 in die Kapselung integriert; andere Ausbildungen der Öffnung 7 sind möglich.

In einer Hochspannungsposition des Erder-Trenners wird ein Kontakt zwischen einer hochspannungsbeaufschlagten Kontakttulpe 5 und dem Metallteil 21 gebildet, indem ein hochspannungsseitiges Ende 6a des Kontaktrohres 10 die Kontakttulpe 5 mittels Spiralfederkontakten 20 kontaktiert.

In der in Fig. 1 dargestellten Zwischenposition kontaktiert das Kontaktrohr 10 weder die Erdungs- noch die Hochspannungsseite des Erder-Trenners.

Für weitere Details zum Aufbau und zur Funktion des beschriebenen Erder-Trenners wird auf die am gleichen Tag wie die vorliegende Patentanmeldung beim europäischen Patentamt und mit "Schaltgerät mit Trenn- und/oder Erderfunktion" betitelte Patentanmeldung der Erfinder Daniel Bleiker, Bojan Pavlovic, Diego Sologuren, Walter Holaus und Martin Wieser desselben Anmelders verwiesen.

Der dargestellte Erder-Trenner weist für seine drei Einbaulagen (siehe Figs. 1, 2, 3) jeweils eine vertikal unterhalb der Trennerstrecke 4 angeordnete Partikelfalle auf, wobei in den in den Figs. 2 und 3 dargestellten Einbaulagen je eine Partikelfalle sowohl vertikal unterhalb der Trennerstrecke 4 als auch vertikal unterhalb der Trennerstrecke 4' angeordnet ist. Eine zusätzliche Partikelfalle für die erdseitige Trennstrecke 4' könnte für die in Fig. 1 dargestellte Einbaulage vorgesehen werden (nicht dargestellt).

In Fig. 1 wird die Partikelfalle durch eine vertikal ausgerichtete ungefähr zylindrische Öffnung in der Kapselung 10 und ein Sichtfenster 3 gebildet. Das Sichtfenster 3 dient vorteilhaft gleichzeitig als Sichtfenster zur optischen Zugänglichmachung der optischen Trennstrecke 4. Es sind einige Störpartikel 2 innerhalb der Partikelfalle 1 und einige Störpartikel 2' nahe der Partikelfalle 1 dargestellt. Aufgrund der Geometrie der Partikelfalle 1 herrschen innerhalb der Partikelfalle 1 sehr geringe Feldstärken und eine sehr geringe dielektrische Belastung.

Zwischen der Partikelfalle 1 und dem horizontal ausgerichteten Isolatorteil 8 ist ein von der Kapselung 10 gebildeter metallischer Wall 9 gebildet. Die Partikelfalle 1 liegt innerhalb einer Ausbauchung 11 der Kapselung 10. Durch die Ausbauchung 11 wird die elektrische Feldstärke im Bereich der Partikelfalle 1 verringert. Durch den Wall 9 wird es Störpartikeln 2' auf der der Partikelfalle 1 zugewandten Seite des Walles 9 fast unmöglich gemacht oder zumindest erschwert, in Richtung des Isolierteils 8 zu wandern und auf eine dem Innern des Erder-Trenners zugewandten Oberfläche 8a des Isolierteils 8 zu gelangen, so dass also eine hohe Betriebssicherheit des Erder-Trenners erreicht wird. Die Ausbauchung 11 und der Wall 9 können alternativ auch als Bestandteile der Partikelfalle 1 interpretiert werden.

Dielektrisch besonders hoch belastete Orte in einem Hochspannungsschaltgerät sind Tripelpunkte, wie der Tripelpunkt 13, welcher durch das Isolierteil 8, die Kapselung 10 und das Isoliergas 12 gebildet wird. Dort befindliche Störpartikel sind für die dielektrische Festigkeit des Hochspannungsschaltgerätes besonders gefährlich. Ein Wall wie der Wall 9 in Fig. 1 ist darum mit grossem Vorteil zwischen dem Tripelpunkt 13 und der unterhalb der Trennstrecke 4 angeordneten Partikelfalle 1 angeordnet.

In Fig. 1 ist der Erder-Trenner derart ausgerichtet, dass bei einem Schaltvorgang das Kontaktrohr 6 sich in der Horizontalen bewegt. In den in den Figs. 2 und 3 dargestellten Einbaulagen ist das Kontaktrohr 6 vertikal bewegbar.

Als vertikal unterhalb der beiden Trennstrecken 4,4' angeordnete Partikelfalle 1 ' dient in der in Fig. 2 dargestellten Einbaulage im wesentlichen die Kontakttulpe 5. Diese stellt ein metallisches Behältnis dar, in welchem Störpartikel 2 sicher gelagert sind, da das elektrische Feld innerhalb der Kontakttulpe 5 vernachlässigbar klein ist und die Kontakttulpe 5 gleichzeitig einen hohen, praktisch unüberwindbaren Wall für die Störpartikel 2 darstellt. Die Kontakttulpe ist auf ihrer Bodenseite geschlossen und mit einer metallischen Innenarmatur des Isolatorteils verschraubt.

In Fig. 3 ist der Erder-Trenner in einer dritten Einbaulage dargestellt, in welcher die Öffnung 7 zur Aufnahme des Kontaktrohres 6 als vertikal unterhalb der beiden Trennstrecken 4,4' angeordnete Partikelfalle 1'' dient. Die Öffnung 7 ist im wesentlichen ringförmig ausgebildet. Da sie in der Kapselung 10 vorgesehen ist, bietet sie für Störpartikel 2 eine metallische Umgebung, so dass Störpartikel 2 innerhalb der Partikelfalle 1'' nur sehr geringen Feldstärken ausgesetzt und somit dort sicher gelagert sind.

Vorteilhaft ist die Partikelfalle 1,1',1'' mittig unterhalb der (jeweiligen) Trennstrecke angeordnet. Sie kann sich im Falle einer horizontal verlaufenden Trennstrecke (wie in Fig. 1) über die gesamte Länge der Trennstrecke 4 erstrecken oder eine noch grössere Breite aufweisen oder, wie in Fig. 1, eine geringere Breite aufweisen, wobei in letzterem Fall mit grossem Vorteil eine Ausbauchung 11 aufgewiesen wird, welche sich in horizontaler Richtung über mindestens die gesamte Erstreckung der Trennstrecke 4 erstreckt.

Im Falle vertikal verlaufender Trennstrecken (Figs. 2 und 3) erstreckt sich die Partikelfalle vorteilhaft über mindestens die gesamte horizontale Erstreckung der Kontaktstellen (hier: an dem Spiralkontakten 20), so dass die bei Schaltvorgängen durch Abrieb oder gegebenenfalls durch einen Lichtbogen erzeugten Störpartikel, welche im wesentlichen vertikal nach unten fallen, sicher in der Partikelfalle landen. Bei den Partikelfallen 1',1'' in den Figs. 2 beziehungsweise 3 ist dies der Fall.

### Bezugszeichenliste

- 1,1',1'': Partikelfalle
- 2, 2': Störpartikel
- 3: Sichtfenster
- 4: Schaltstrecke, hochspannungsseitige Trennstrecke, sichtbare Trennstrecke
- 4': Schaltstrecke, erdseitige Trennstrecke, Erd-Strecke
- 5: Kontakttulpe
- 6: Kontaktrohr, bewegliches Kontaktstück
- 6a: hochspannungsseitiges Ende des Kontaktrohres
- 6b: erdseitiges Ende des Kontaktrohres
- 7: Öffnung zur Aufnahme des Kontaktrohres
- 8: Isolatorteil
- 8a: Oberfläche
- 9: metallischer Wall
- 10: Kapselung
- 11: Ausbauchung, Mulde
- 12: Isoliergas, SF₆
- 13, 13': Tripelpunkt
- 14: Kontaktrohrträger
- 15: Verbindungsstück
- 16: Isolierwelle
- 17: Spindel
- 18: Spindelführung
- 19: Wandermutter
- 20: Spiralfederkontakt
- 21: Metallteil, Innenarmatur des Isolatorteils

## Patentansprüche

1. Hochspannungsschaltgerät, das in mindestens einer Einbaulage verwendbar ist und eine metallische Kapselung (10) aufweist, beinhaltend eine Schaltstrecke (4;4') und eine Partikelfalle (1,1';1'') zur Aufnahme von Störpartikeln (2), wobei
in der mindestens einen Einbaulage die Partikelfalle (1;1';1'') vertikal unterhalb der Schaltstrecke (4) angeordnet ist, **dadurch gekennzeichnet, dass** in der mindestens einen Einbaulage ein Isolatorteil (8) mit einer im wesentlichen horizontal unterhalb der Schaltstrecke ausgerichteten und dem Innern des Hochspannungsschaltgerätes zugewandten Oberfläche (8a) vorhanden ist, und wobei zwischen dem Isolatorteil (8) und der Partikelfalle (1;1') ein gegenüber der Partikelfalle (1;1') erhöhter metallischer Wall (9) angeordnet ist.

2. Hochspannungsschaltgerät gemäss Anspruch 1, **dadurch gekennzeichnet, dass** die Partikelfalle (1) ein Sichtfenster (3) beinhaltet.

3. Hochspannungsschaltgerät gemäss einem der vorangegangenen Ansprüche, **dadurch gekennzeichnet, dass** das Hochspannungsschaltgerät in mindestens einer zweiten Einbaulage verwendbar ist und eine zweite Partikelfalle (1;1';1'') aufweist, wobei in der mindestens einen zweiten Einbaulage die zweite Partikelfalle (1;1';1'') vertikal unterhalb der Schaltstrecke (4) angeordnet ist.

4. Hochspannungsschaltgerät gemäss Anspruch 3, **dadurch gekennzeichnet, dass** eine der Partikelfallen (1') im wesentlichen durch eine Kontakttulpe (5) des Hochspannungsschaltgerätes gebildet ist.

5. Hochspannungsschaltgerät gemäss einem der vorangegangenen Ansprüche, **dadurch gekennzeichnet, dass** das Hochspannungsschaltgerät ein Trenner mit einem beweglichen Kontaktstück (6) und mit einer sichtbaren Trennstrecke (4) als Schaltstrecke (4) ist.

6. Hochspannungsschaltgerät gemäss Anspruch 5, **dadurch gekennzeichnet, dass** die Partikelfalle (1'') im wesentlichen durch eine Öffnung (7) zur Aufnahme des beweglichen Kontaktstückes (6) gebildet ist.

7. Hochspannungsschaltgerät gemäss Anspruch 2 und Anspruch 5 oder gemäss Anspruch 2 und Anspruch 6, **dadurch gekennzeichnet, dass** das Hochspannungsschaltgerät ein Sichtfenster (3) zur optischen Zugänglichmachung der sichtbaren Trennstrecke (4) aufweist, welches identisch ist mit dem Sichtfenster (3) der Partikelfalle (1).

8. Hochspannungsschaltgerät gemäss einem der Ansprüche 5, 6 oder 7, **dadurch gekennzeichnet, dass** der Trenner ein Trenner-Erder mit einer erdseitigen (4') und einer hochspannungsseitigen Trennstrecke (4) ist.

9. Hochspannungsschaltgerät gemäss Anspruch 1, **dadurch gekennzeichnet, dass** das Hochspannungsschaltgerät ein Trenner-Erder mit einer erdseitigen (4') und einer hochspannungsseitigen Trennstrecke (4) ist, welcher ein bewegliches Kontaktstück (6) aufweist und in mindestens einer ersten und einer zweiten und einer dritten Einbaulage verwendbar ist, wobei
- in der ersten Einbaulage eine erste Partikelfalle (1), welche ein Sichtfenster (3) beinhaltet, vertikal unterhalb einer der Trennstrecken (4) angeordnet ist,
- in der zweiten Einbaulage eine zweite Partikelfalle (1'), welche im wesentlichen durch eine Festkontakttulpe (5) des Hochspannungsschaltgerätes gebildet ist, vertikal unterhalb einer der Trennstrecken (4;4') angeordnet ist, und
- in der dritten Einbaulage eine dritte Partikelfalle (1''), welche im wesentlichen durch eine Öffnung (7) zur Aufnahme des beweglichen Kontaktstückes (6) gebildet ist, vertikal unterhalb einer der Trennstrecken (4;4') angeordnet ist.

10. Hochspannungsanlage, **dadurch gekennzeichnet, dass** sie mindestens ein Hochspannungsschaltgerät gemäss einem der vorangegangenen Patentansprüche aufweist.

11. Verfahren zum Separieren von Störpartikeln (2) in einem Hochspannungsschaltgerät, das in mindestens einer Einbaulage verwendbar ist und eine Schaltstrecke (4,;4') und eine Partikelfalle (1) zur Aufnahme der Störpartikel (2) aufweist, wobei die Störpartikel (2) in einer in der mindestens einen Einbaulage vertikal unterhalb der Schaltstrecke (4) angeordneten Partikelfalle (1) separiert werden, **dadurch gekennzeichnet, daß** in der mindestens einen Einbaulage ein Isolatorteil (8) mit einer im wesentlichen horizontal unterhalb der Schaltstrecke ausgerichteten und dem Innern des Hochspannungsschaltgerätes zugewandten Oberfläche (8a) vorhanden ist, und wobei zwischen dem Isolatorteil (8) und der Partikelfalle (1;1') ein gegenüber der Partikelfalle (1;1') erhöhter metallischer Wall (9) angeordnet ist.

## Claims

1. High-voltage switching device which can be used in at least one installation position and has metallic encapsulation (10), containing a switching gap (4; 4') and a particle trap (1; 1'; 1") for holding foreign body particles (2), in which, in the at least one installation position, the particle trap (1; 1'; 1") is arranged vertically underneath the switching gap (4), **characterized in that**, in the at least one installation position, an isolator part (8) is provided, which has a surface (8a) that is aligned essentially horizontally below the switching gap and faces the interior of the high-voltage switching device, with a metallic wall (9), which is higher than the particle trap (1; 1'), being arranged between the isolator part (8) and the particle trap (1; 1').

2. High-voltage switching device according to Claim 1, **characterized in that** the particle trap (1) contains a viewing window (3).

3. High-voltage switching device according to one of the preceding claims, **characterized in that** the high-voltage switching device can be used in at least one second installation position and has a second particle trap (1; 1'; 1"), with the second particle trap (1; 1'; 1") being arranged vertically underneath the switching gap (4) in the at least one second installation position.

4. High-voltage switching device according to Claim 3, **characterized in that** one of the particle traps (1') is formed essentially by a contact tulip (5) of the high-voltage switching device.

5. High-voltage switching device according to one of the preceding claims, **characterized in that** the high-voltage switching device is a disconnector with a moving contact piece (6) and with a visible disconnecting gap (4) as the switching gap (4).

6. High-voltage switching device according to Claim 5, **characterized in that** the particle trap (1'') is formed essentially by an opening (7) for holding the moving contact piece (6).

7. High-voltage switching device according to Claim 2 and Claim 5, or according to Claim 2 and Claim 6, **characterized in that** the high-voltage switching device has a viewing window (3) for visual access to the visible disconnecting gap (4), which is identical to the viewing window (3) for the particle trap (1).

8. High-voltage switching device according to one of Claims 5, 6 or 7, **characterized in that** the disconnector is a disconnector/grounding device with a disconnecting gap (4') on the ground side and a disconnecting gap (4) on the high-voltage side.

9. High-voltage switching device according to Claim 1, **characterized in that** the high-voltage switching device is a disconnector/grounding device with a disconnecting gap (4') on the ground side and a disconnecting gap (4) on the high-voltage side, which has a moving contact piece (6) and can be used in at least one first, one second and one third installation position, with
- a first particle trap (1) which contains a viewing window (3) being arranged vertically underneath one of the disconnecting gaps (4) in the first installation position,
- a second particle trap (1'), which is formed essentially by a fixed contact tulip (5) in the high-voltage switching device, being arranged vertically underneath one of the disconnecting gaps (4; 4') in the second installation position, and
- a third particle trap (1''), which is formed essentially by an opening (7) for holding the moving contact piece (6), being arranged vertically underneath one of the disconnecting gaps (4; 4') in the third installation position.

10. High-voltage installation, **characterized in that** the installation has at least one high-voltage switching device according to one of the preceding patent claims.

11. Method for separation of foreign body particles (2) in a high-voltage device which can be used in at least one installation position and has a switching gap (4; 4') and a particle trap (1) for holding foreign body particles (2), in which the foreign body particles (2) are separated in a particle trap (1) which is arranged vertically underneath the switching gap (4) in the at least one installation position, **characterized in that** an isolator part (8) having a surface (8a) which is aligned essentially horizontally below the switching gap and faces the interior of the high-voltage switching device is provided in the at least one installation position, and with a metallic wall (9), which is higher than the particle trap (1; 1'), being arranged between the isolator part (8) and the particle trap (1; 1').

## Revendications

1. Appareil de commutation à haute tension, utilisable dans au moins une des positions de montage et qui comporte une encapsulation métallique (10), comprenant une distance d'isolement entre contacts ouverts (4 ; 4') et un piège à particules (1 ; 1' ; 1'') pour recueillir des particules perturbatrices (2), le piège à particules (1 ; 1' ; 1") étant disposé verticalement sous la distance d'isolement entre contacts ouverts (4) dans au moins une des positions de montage, **caractérisé en ce que** dans au moins une des positions de montage, une partie isolante (8) est ajustée au-dessous de la distance d'isolement entre contacts ouverts avec une surface (8a) essentiellement horizontale orientée vers l'intérieur de l'appareil de commutation à haute tension, et un épaulement de rétention métallique surélevé (9) étant disposé en face du piège à particules (1 ; 1') entre la partie isolante (8) et le piège à particules (1 ; 1').

2. Appareil de commutation à haute tension selon la revendication 1, **caractérisé en ce que** le piège à particules (1) comprend une fenêtre d'observation (3).

3. Appareil de commutation à haute tension selon une des revendications précédentes, **caractérisé en ce que** l'appareil de commutation à haute tension est utilisable dans au moins une deuxième position de montage et qu'il comporte un deuxième piège à particules (1 ; 1' ; 1"), le deuxième piège à particules (1 ; 1' ; 1") étant disposé verticalement sous la distance d'isolement entre contacts ouverts (4) dans au moins une des deuxième position de montage.

4. Appareil de commutation à haute tension selon la revendication 3, **caractérisé en ce qu'**un des pièges à particules (1') est essentiellement formé par une tulipe de contact (5) de l'appareil de commutation à haute tension.

5. Appareil de commutation à haute tension selon une des revendications précédentes, **caractérisé en ce que** l'appareil de commutation à haute tension est un sectionneur avec une pièce de contact mobile (6) et avec une distance de sectionnement visible (4) comme distance d'isolement entre contacts ouverts (4).

6. Appareil de commutation à haute tension selon la revendication 5, **caractérisé en ce que** le piège à particules (1") est essentiellement formé par une ouverture (7) pour recevoir la pièce de contact mobile (6).

7. Appareil de commutation à haute tension selon la revendication 2 et la revendication 5 ou selon la revendication 2 et la revendication 6, **caractérisé en ce que** l'appareil de commutation à haute tension comporte une fenêtre d'observation (3) pour l'accès optique à la distance de sectionnement (4) visible, qui est identique à la fenêtre d'observation (3) du piège à particules (1).

8. Appareil de commutation à haute tension selon une des revendications 5, 6 ou 7, **caractérisé en ce que** le sectionneur est un sectionneur-mise-à-la-terre avec une distance de sectionnement du côté terre (4') et une du côté haute tension (4).

9. Appareil de commutation à haute tension selon la revendication 1, **caractérisé en ce que** l'appareil de commutation à haute tension est un sectionneur-mise-à-la-terre avec une distance de sectionnement du côté terre (4') et une du côté haute tension (4), qui comporte une pièce de contact mobile (6) et qui est utilisable dans au moins une première et une deuxième et une troisième position de montage,
- dans la première position de montage, un premier piège à particules (1) comprenant une fenêtre d'observation (3) est disposé verticalement au-dessous d'une des distances de sectionnement (4),
- dans la deuxième position de montage, un deuxième piège à particules (1') qui est essentiellement formé par une tulipe de contact fixe (5) de l'appareil de commutation à haute tension, est disposé verticalement au-dessous d'une des distances de sectionnement (4 ; 4'), et
- dans la troisième position de montage, un troisième piège à particules (1") qui est essentiellement formé par une ouverture (7) pour recevoir la pièce de contact mobile (6), est disposé verticalement au-dessous d'une des distances de sectionnement (4 ; 4').

10. Installation à haute tension, **caractérisé en ce qu'**elle comporte au moins un appareil de commutation à haute tension selon une des revendications précédentes du brevet.

11. Procédé pour la séparation de particules perturbatrices (2) dans un appareil de commutation à haute tension, utilisable dans au moins une des positions de montage et qui comporte une distance d'isolement entre contacts ouverts (4 ; 4') et un piège à particules (1) pour recueillir les particules perturbatrices (2), les particules perturbatrices (2) étant séparées dans un piège à particules (1) disposé verticalement sous la distance d'isolement entre contacts ouverts (4) dans au moins une des positions de montage, **caractérisé en ce que** dans au moins une des positions de montage, une partie isolante (8) est ajustée au-dessous de la distance d'isolement entre contacts ouverts avec une surface (8a) essentiellement horizontale orientée vers l'intérieur de l'appareil de commutation à haute tension, et un épaulement de rétention métallique surélevé (9) étant disposé en face du piège à particules (1 ; 1') entre la partie isolante (8) et le piège à particules (1 ; 1').
